(19) Europäisches Patentamt / European Patent Office / Office européen des brevets

(11) **EP 4 207 058 A1**

(12) # EUROPEAN PATENT APPLICATION
published in accordance with Art. 153(4) EPC

(43) Date of publication:
**05.07.2023 Bulletin 2023/27**

(21) Application number: **21860190.4**

(22) Date of filing: **16.08.2021**

(51) International Patent Classification (IPC):
***G06T 7/00*** (2017.01)

(86) International application number:
**PCT/CN2021/112777**

(87) International publication number:
**WO 2022/042352 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2020 CN 202010881849**

(71) Applicant: **Ankon Technologies Co., Ltd**
**Wuhan, Hubei 430000 (CN)**

(72) Inventors:
• **WANG, Tingqi**
**Wuhan, Hubei 430000 (CN)**
• **GAO, Fei**
**Wuhan, Hubei 430000 (CN)**
• **DUAN, Xiaodong**
**Wuhan, Hubei 430000 (CN)**
• **HOU, Xiaohua**
**Wuhan, Hubei 430000 (CN)**
• **XIE, Xiaoping**
**Wuhan, Hubei 430000 (CN)**
• **XIANG, Xuelian**
**Wuhan, Hubei 430000 (CN)**

(74) Representative: **Lavoix**
**Bayerstraße 83**
**80335 München (DE)**

(54) **IMAGE RECOGNITION METHOD, ELECTRONIC DEVICE AND READABLE STORAGE MEDIUM**

(57) The present invention provides an image recognition method, an electronic device and a computer-readable storage medium. The method comprises: segmenting an original image into a plurality of unit images having the same predetermined size; inputting the unit images into a pre-built neural network model to carry out processing, so as to correspondingly add a detection frame to a marker in each unit image to form a pre-detection unit image; stitching a plurality of pre-detection unit images into a pre-output image according to segmentation positions of each unit image in the original image; determining whether the markers selected in two adjacent detection frames in the pre-output image are the same marker; outputting the image with the detection frames until all the detection frames confirmed to have the same markers are all merged. The present invention can effectively recognize types and positions of the markers in the image.

FIG. 1

**Description**

**CROSS-REFERENCE TO RELATED APPLICATION**

The application claims priority from Chinese Patent Application No. 202010881849.X, filed August 28, 2020, entitled "Image Recognition Method, Electronic Device and Readable Storage Medium", all of which are incorporated herein by reference in their entirety.

**TECHNICAL FIELD**

The present invention relates to the field of image recognition of medical equipment, and more particularly to an image recognition method, an electronic device, and a readable storage medium.

**BACKGROUND**

Gastrointestinal motility refers to the ability of normal gastrointestinal peristalsis to help complete the digestion and absorption of food. Poor gastrointestinal motility may result in an indigestion.

In the prior art, the strength of gastrointestinal motility is generally identified by gastrointestinal markers. Specifically, after a user swallows markers of different shapes in several times, the positions of the markers are determined through images obtained by X-ray imaging, and then the strength of gastrointestinal motility is determined.

In the prior art, the positions and types of the markers in a X-ray image are usually determined by manually observing the image. However, for markers of different shapes swallowed in different times, the size displayed on the X-ray image is small, and there are many types, so it is difficult to accurately count the positions and quantities of various markers by manual observation, and the gastrointestinal motility of a subject cannot be determined.

**SUMMARY**

To solve the problems above, the present invention provides an image recognition method, an electronic device, and a readable storage medium.

In order to achieve one of the above-mentioned objects of the present invention, an embodiment of the present invention provides an image recognition method. The method comprises: segmenting an original image into a plurality of unit images having the same predetermined size, wherein a plurality of markers are distributed in the original image;

inputting the unit images into a pre-built neural network model to carry out processing, so as to correspondingly add a detection frame for a marker in each unit image to form a pre-detection unit image, wherein the detection frame is a minimum rectangular frame enclosing the marker;

stitching a plurality of pre-detection unit images into a pre-output image according to segmentation positions of each unit image in the original image;

determining whether the markers selected in two adjacent detection frames in the pre-output image are the same marker;

merging the two detection frames when the markers selected in two adjacent detection frames in the pre-output image are the same marker; and

reserving different detection frames corresponding to different markers when the markers selected in two adjacent detection frames in the pre-output image are not the same marker; and

outputting the image with the detection frames until all the detection frames confirmed to have the same markers are all merged;

wherein, determining whether the markers selected in two adjacent detection frames in the pre-output image are the same marker comprises: determining a type of the marker in each detection frame according to the probability of the type of the marker, and determining whether the markers in the frames are the same marker according to coordinate values of the two adjacent detection frames when the markers in two adjacent detection frames are of the same type.

In an embodiment of the present invention, in the step of segmenting the original image into the plurality of unit images having the same predetermined size, the method further comprises:

if a size of any unit image is less than the predetermined size in the segmentation process, complementing edge pixel values to the original image before the unit images are formed, or complementing edge pixel values to the unit images with a size less than the predetermined size after the unit images are formed.

In an embodiment of the present invention, the method for building the neural network model comprises:

extracting at least one feature layer by using convolutional neural networks corresponding to each unit image:
wherein in the process of extracting the feature layer, p convolution kernels of m*m are configured to convolution predictors of anchor frames to process the unit images, p=(c1+c2)*k, wherein the anchor frames are preset rectangular frames with different aspect ratios, m is an odd positive integer, c1 represents the number of types of markers, k represents the number of anchor frames, and c2 represents the number of offset parameters for adjusting the anchor frames; wherein the detection frame is obtained by changing the size of the anchor frame.

In an embodiment of the present invention, the method further comprises:
performing pooling layer processing on the unit images for a plurality of times according to the types and size of the markers to obtain the corresponding feature layers.

In an embodiment of the present invention, in the process of performing pooling layer processing on the unit images for the plurality of times according to the types and size of the markers to obtain the corresponding feature layers, the method comprises:
before performing pooling layer processing on a unit image each time, performing convolution layer processing on the unit image at least once, and sizes of the convolution kernels are the same.

In an embodiment of the present invention, the method further comprises: setting c2=4, and the offset parameters for adjusting the anchor frames comprise width offset values and height offset values of an upper left corner, a width scaling factor and a height scaling factor.

In an embodiment of the present invention, determining whether the markers in the frames are the same marker according to the coordinate values of the two adjacent detection frames comprises:
establishing a rectangular coordinate system by taking an upper left corner of the original image as a coordinate origin, and comparing whether the difference between feature values of two horizontally adjacent detection frames is within a threshold range, and determining that the markers selected in the two detection frames used in current calculation are the same marker when the difference is within the threshold range, wherein the feature values are coordinate values of the upper left corner and coordinate values of a lower right corner of each detection frame.

In an embodiment of the present invention, determining whether the markers in the frames are the same marker according to the coordinate values of the two adjacent detection frames comprises:
establishing a rectangular coordinate system by taking an upper left corner of the original image as a coordinate origin, and comparing whether the difference between feature values of two vertically adjacent detection frames is within a threshold range, and determining that the markers selected in the two detection frames used in current calculation are the same marker when the difference is within the threshold range, wherein the feature values are coordinate values of the upper left comer and coordinate values of a lower right corner of each detection frame.

In an embodiment of the present invention, merging the two detection frames comprises:

comparing the coordinate values of the upper left corners of the two detection frames currently used for calculation, and respectively taking the minimum values of the horizontal coordinate and the vertical coordinate as the coordinate values of the upper left corner of the merged detection frame;
comparing the coordinate values of the lower right corners of the two detection frames, and respectively taking the maximum values of the horizontal coordinate and the vertical coordinate as the coordinate values of the lower right corner of the merged detection frame.

In order to achieve one of the above-mentioned objects of the present invention, an embodiment of the present invention provides an electronic device. The electronic device comprises a memory and a processor, wherein the memory stores a computer program that can run on the processor, and the processor executes the computer program to implement the steps of the image recognition method as described above.

In order to achieve one of the above-mentioned objects of the present invention, an embodiment of the present invention provides a computer-readable storage medium. The computer-readable storage medium stores a computer program and the computer program is executed by the processor to implement the steps of the image recognition method as described above.

According to all aspects of the present invention, the advantages over the prior art are that: with the image recognition method, the electronic device and the computer-readable storage medium of the present invention, the original image is automatically processed by a neural network model to add detection frames, and further, the detection frames labeled repeatedly are merged to improve the accuracy of image marking, so that the types and positions of markers in the image are effectively recognized, and the gastrointestinal motility of a subject is accurately determined.

**BRIEF DESCRIPTION OF THE DRAWINGS**

FIG.1 is a flow schematic diagram of an image recognition method, in accordance with an embodiment of the present invention.

FIG. 2 is a structural diagram of a neural network according to a preferred embodiment of the present invention.

FIG. 3 is a schematic diagram of a result from processing an original image in steps S1 to S3 as shown in FIG. 1.

FIG. 4 is a schematic diagram of a result from processing in step S4 shown in FIG. 1 on the basis of FIG. 3.

## DETAILED DESCRIPTION

The present invention will be described in detail below in conjunction with the specific embodiments shown in the accompanying drawings. However, the embodiments are not intended to limit the present invention, and the structural, method, or functional changes made by those skilled in the art in accordance with the embodiments are included in the scope of the present invention.

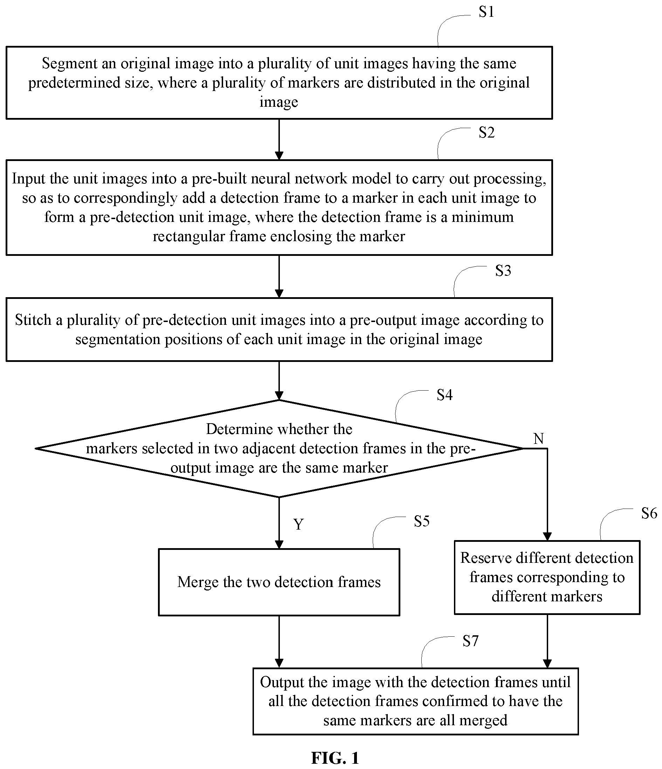

Referring to FIG. 1, in a first embodiment of the present invention, an image recognition method is provided, the method comprising:

step S1, segmenting an original image into a plurality of unit images having the same predetermined size, wherein a plurality of markers are distributed in the original image;

step S2, inputting the unit images into a pre-built neural network model to carry out processing, so as to correspondingly add a detection frame to a marker in each unit image to form a pre-detection unit image, wherein the detection frame is a minimum rectangular frame enclosing the marker;

step S3, stitching a plurality of pre-detection unit images into a pre-output image according to segmentation positions of each unit image in the original image;

step S4, determining whether the markers selected in two adjacent detection frames in the pre-output image are the same marker:

if the markers selected in two adjacent detection frames are the same marker, executing step S5: merging the two detection frames; and

if the markers selected in two adjacent detection frames are not the same marker, executing step S6: reserving different detection frames corresponding to different markers; and

step S7, outputting the image with the detection frames until all the detection frames confirmed to have the same markers are all merged.

In a specific embodiment of the present invention, the original image is usually large in size, and in order to improve the accuracy of recognition, it is necessary to segment the image before the recognition of the image, and restore the image according to the segmentation sequence after the recognition of the image.

In step S1, in the process of segmenting the original image into a plurality of unit images with the same predetermined size, the image may be segmented in sequence starting from the edges and corners of the original image, or the image may be segmented as required on the basis of any point in the original image after the point is selected. Correspondingly, the method further comprises: if a size of any unit image is less than the predetermined size in the segmentation process, complementing edge pixel values to the original image before the unit images are formed, or complementing edge pixel values to the unit images with a size less than the predetermined size after the unit images are formed, so that the size of each unit image is the same as the predetermined size.

It should be noted that, in a specific application process, the original image may be segmented first, and if the size of the finally formed unit image is less than the predetermined size, the edge pixel values are complemented only for the finally formed unit image. It is also possible to calculate in advance whether the current original image can be completely segmented according to the predetermined size before the image segmentation, and if it cannot be completely segmented, the edge pixel values are complemented to the edge of the original image before the segmentation. Usually, the pixel value of the complementing position can be set specifically as needed, e.g., set to 0, which is not further described here.

Preferably, after segmentation, the unit image is a square in shape. And in a specific example of the present invention, the size of the unit image after segmentation is 320*320, and the unit is a pixel.

In step S2, the method for building the neural network model comprises: extracting at least one feature layer by using convolutional neural networks (CNN) corresponding to each unit image.

In an embodiment of the present invention, in the process of extracting the feature layer, p convolution kernels of m*m are configured to convolution predictors of anchor frames to process the unit images, so as to predict the type and the position of the markers. Wherein, m is an odd positive integer. The anchor frame is a preset rectangular frame with different aspect ratios, $p = (c1 + c2)* k$, wherein c1 represents the number of types of markers, k represents the number of anchor frames, and c2 represents the number of offset parameters for adjusting the anchor frames. The detection frame is obtained by changing the size of the anchor frame.

Further, the unit images are subjected to pooling layer processing for a plurality of times according to the types and size of the markers to obtain the corresponding feature layers; that is, the types and size of the markers determine the number and size of the feature layers. Specifically, the size of the markers on the original image is pre-divided to determine the number and size of the feature layers.

Preferably, in the process of performing pooling layer processing on the unit images for a plurality of times according to the types and size of the markers to obtain the corresponding feature layers, the method specifically comprises: before performing pooling layer processing on a unit image each time, performing convolution layer processing on the unit image at least once, and the sizes of convolution kernels are the same.

The convolution layer processing refers to dimension reduction and feature extraction on an input image through convolution operations. The pooling layer processing is used to reduce the spatial size of the image.

In order to facilitate understanding, a specific example is described below for reference.

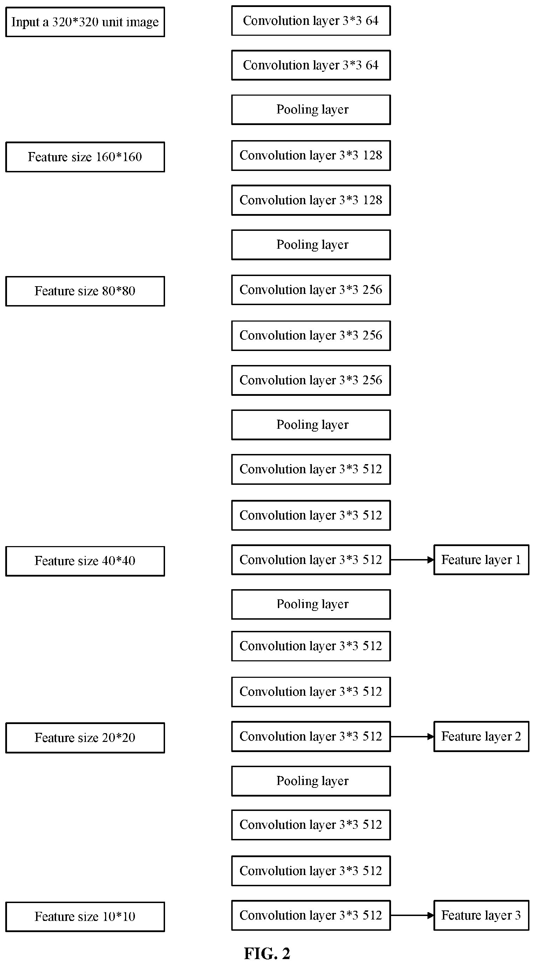

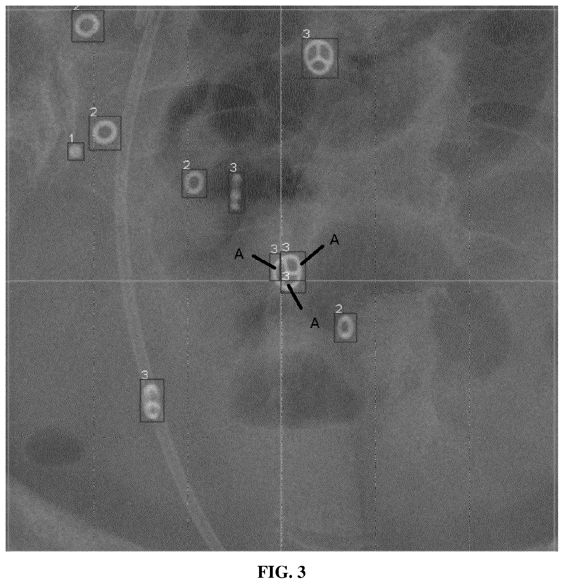

Referring to FIGS. 2- 4, in a specific example of the present invention, there are three types of markers to be recognized. Referring to FIG. 3, the shapes of the markers are: dot type, O-ring type and tri-chamber type. Since an X-ray device may capture incomplete markers or overlapping markers on an X-ray image, even the markers of the same type may appear in different size on the X-ray image. Thus, the size of the markers displayed on the X-ray image needs to be pre-divided to determine the number of feature layers that need to be set up.

Referring to FIG. 2, a neural network model for feature extraction in this example is established and configured with three feature layers. The original image is divided into a plurality of 320*320 unit images in sequence, and the feature extraction is carried out on each unit image by establishing convolutional neural networks. Specifically, the size of an input unit image is 320*320, and the convolution layer processing and pooling layer processing are sequentially performed on the input image to obtain the required feature layers respectively. After 2 convolution layer processing and 1 pooling layer processing, 2 convolution layer processing and 1 pooling layer processing, 3 convolution layer processing and 1 pooling layer processing, and 3 convolution layer processing are sequentially performed on the unit image (320*320), a feature layer 1 is extracted. Since a total of 3 pooling layer processing are performed, each of which reduces the image size by a factor of 2 compared to the previous image size, the image size of the feature layer 1 is reduced to 40*40, enabling detection of markers ranging in size from 8*8 to 24*24. Based on the image of the feature layer 1 (40*40), 1 pooling layer processing and 3 convolution layer processing are sequentially performed to extract a feature layer 2. The image size of the feature layer 2 is twice as small as that of the feature layer 1, which is 20*20, enabling detection of markers ranging in size from 16*16 to 48*48. Based on the image of the feature layer 2 (20*20), 1 pooling layer processing and 3 convolution layer processing are sequentially performed to extract a feature layer 3. The image size of the feature layer 3 is 10*10, enabling detection of markers ranging in size from 32*32 to 96*96. The size and number of the convolution kernels used in each convolution layer processing can be set according to actual requirements, for example, the number of the convolution kernels is 64, 128, 256, 512, etc., as shown in FIG. 2. Alternatively, in other embodiments, a neural network may be constructed and the number of feature layers may be configured according to actual requirements.

Preferably, in a specific example of the present invention, a 3*3 convolution is configured to process the image, that is, m=3 is set. There are three types of markers to be recognized, that is, c1=3 is set, which are dot type, O-ring type and tri-chamber type. The anchor frame is a plurality of bounding frames with different size and aspect ratios generated by taking any pixel point as a center. The offset parameters for adjusting the anchor frame specifically comprise: width offset values and height offset values of an upper left corner, width scaling factors and height scaling factors, that is, c2=4 is set.

Specifically, the output of c1 is a one-dimensional array, denoted result_c1[3]. Wherein, result_c1[0], result_c1[1], and result_c1[2] are three elements of the array, each representing the probability of a type that the marker in the anchor frame may have. In a specific example, result_c1[0] represents the probability that the marker in the anchor frame is of a dot type, result_c1[1] represents the probability that the marker in the anchor frame is of an O-ring type, result_c1[2] represents the probability that the marker in the anchor frame is of a tri-chamber type, and the value ranges of the three elements are all from 0 to 1. The type of the marker in the anchor frame is determined by the maximum value of the three elements. For example, when the value of result-c1[0] is the maximum among the three elements, the marker in the corresponding anchor frame is of dot type.

The output of c2 is a one-dimensional array, denoted result_c2[4]. Wherein, result_c2[0], result_c2[1], result_c2[2] and result_c2[3] are four elements of the array, which respectively represent the width offset value of the upper left corner of the anchor frame, the height offset value of the upper left corner of the anchor frame, the width scaling factor of the anchor frame and the height scaling factor of the anchor frame, and their values range from 0 to 1. By the output of c2, the size of the anchor frame is adjusted to form a detection frame.

Through the above steps, the types and positions of the markers are preliminarily determined.

In addition, it should be noted that, when the neural network model is initially built, the unit images for training are first manually labeled, and the labeling content is the type information of the marker, which includes: a detection frame enclosing each marker, and a coordinate value of the upper left corner and a coordinate value of the lower right corner corresponding to the detection frame. Then, the unlabeled unit images are input to the initially built neural network model for prediction. The closer the result of prediction is to the result of manual labeling, the higher the detection accuracy of the neural network model is, and when the ratio of the result of prediction to the result of manual labeling is greater than a preset ratio, the neural network model can be normally applied. In this process, when the ratio of the result of prediction to the result of manual labeling is not greater than the preset ratio, the neural network model needs to be adjusted until the requirement is met. Thus, the neural network model is trained through the above contents, so that the result of prediction is more accurate. In this process, when the ratio of the result of prediction to the result of manual labeling is not greater than the preset ratio, the neural network model needs to be adjusted until the requirement is met. Thus, the neural network model is trained through the above contents, so that the result of prediction is more accurate. In the process of constructing the neural network, the detection accuracy of the neural network model can be evaluated by Intersection over Union (IoU), which is not further described here.

In step S3, a neural network model is configured to add detection frames to the markers in the unit images to form a pre-output image as shown in FIG. 3, which is formed by stitching a plurality of pre-detection unit images according to the segmentation positions of the original image. In this specific embodiment, the markers at the stitching positions of the plurality of pre-detection unit images are decomposed into a plurality of parts, and the plurality of parts of the same marker in different pre-detection images are simultaneously recognized by the plurality of detection frames. This results in the marker being recognized multiple times in the resulting output image. In this specific example, the image is composed of 4 pre-detection unit images, and there are three types of markers to be recognized, namely, dot type with a number of 1, O-ring type with a number of 2, and tri-chamber type with a number of 3. Wherein, the same tri-chamber marker A at the boundary position of the four pre-detection unit images is repeatedly labeled by three detection frames. If the current image is used for output, the marker A may be counted for three times, and correspondingly, three recognition positions is given, which is not conducive to the statistics and position determination of the marker, thus affecting the accuracy of determining the gastrointestinal motility of a subject.

Correspondingly, in order to solve the problem, in the preferred embodiment of the present invention, multiple detection frames of the same marker need to be merged, so that only one detection frame corresponding to each marker in the finally output image is uniquely recognized, which is conducive to the statistics and position determination of the markers, thereby accurately determining the gastrointestinal motility of the subject.

Specifically, step S4 specifically comprises: determining the type of the marker in each detection frame according to the probability of the type of the marker, and if the markers in two adjacent detection frames are of the same type, determining whether the markers in the frames are the same marker according to the coordinate values of the two adjacent detection frames.

Further, determining whether the markers in the frames are the same marker according to the coordinate values of the two adjacent detection frames comprises:

determining whether the markers selected in two adjacent detection frames in the horizontally stitched pre-detection unit image are the same marker;
establishing an XY rectangular coordinate system by taking the upper left corner of the original image as a coordinate origin, extending the coordinate origin rightward as an X-axis positive direction, and extending the coordinate origin downward as a Y-axis positive direction; wherein the x-axis is the horizontal axis and the y-axis is the vertical axis. Comparing whether the difference between the feature values of two horizontally adjacent detection frames is within a threshold range, and if the difference is within the threshold range, determining that the markers selected in the two detection frames used in current calculation are the same marker, wherein the feature values are the coordinate value of the upper left corner and the coordinate value of the lower right corner of each detection frame;
that is, $abs(rectangles[i+1][x_L]-rectangles[i][x_L])<n1$,
and $(rectangles[i+1][y_L] - rectangles[i][y_L])<n2$ are met at the same time;
wherein, $abs()$ represents the absolute value, $rectangles[i][]$ represents the coordinate value of the i-th detection frame in the horizontal direction, and $x_L$ and $y_L$ respectively represent the horizontal coordinate value and vertical coordinate value of the upper left corner of the detection frame; i is an integer, $n1 \in (1, 2, 3)$, $n2 \in (5, 10, 15)$.

In addition, the step of determining whether the markers in the frames are the same marker according to the coordinate values of the two adjacent detection frames further comprises: determining whether the markers selected in two adjacent detection frames in the vertically stitched pre-detection unit image are the same marker;

establishing an XY rectangular coordinate system by taking the upper left corner of the original image as a coordinate origin, extending the coordinate origin rightward as an X-axis positive direction, and extending the coordinate origin downward as a Y-axis positive direction; wherein the x-axis is the horizontal axis and the y-axis is the vertical axis. Comparing whether the difference between the feature values of two vertically adjacent detection frames is within a threshold range, and if the difference is within the threshold range, determining that the markers selected in the two detection frames used in current calculation are the same marker, wherein the feature values are the coordinate value of the upper left corner and the coordinate value of the lower right corner of each detection frame;

that is, abs(rectangles[j+1][$x_L$]-rectangles[j][$x_L$])<n3,

and abs(rectangles[j+1][$y_L$] - rectangles[j][$y_L$])<n4 are met at the same time;

wherein, abs() represents the absolute value, rectangles[j] [] represents the coordinate value of the j-th detection frame in the vertical direction, and $x_L$ and $y_L$ respectively represent the horizontal coordinate value and vertical coordinate value of the upper left corner of the detection frame; j is an integer, $n3 \in (40, 50, 60)$, $n4 \in (1, 2, 3)$.

Further, after determining that the markers selected in the two detection frames used in current calculation are the same marker, the two detection frames are merged, and the merging method specifically comprises:

comparing the coordinate values of the upper left corners of the two detection frames currently used for calculation, and respectively taking the minimum values of the horizontal coordinate and the vertical coordinate as the coordinate values of the upper left corner of the merged detection frame;

comparing the coordinate values of the lower right corners of the two detection frames, and respectively taking the maximum values of the horizontal coordinate and the vertical coordinate as the coordinate values of the lower right corner of the merged detection frame.

Correspondingly, the coordinates ($x_{aL}$, $Y_{aL}$) of the upper left corner and the coordinates ($x_{aR}$, $y_{aR}$) of the lower right corner of the detection frame after the horizontal merging are respectively:

$$x_{aL}=\min(\text{rectangles}[i+1][x_L], \text{rectangles}[i][x_L]),$$

$$y_{aL}=\min(\text{rectangles}[i+1][y_L], \text{rectangles}[i][y_L]),$$

$$x_{aR}=\max(\text{rectangles}[i+1][x_R], \text{rectangles}[i][x_R]),$$

$$y_{aR}=\max(\text{rectangles}[i+1][y_R], \text{rectangles}[i][y_R]),$$

wherein, min() represents the minimum value, and max() represents the maximum value; $x_R$ and $y_R$ represent the horizontal coordinate value and the vertical coordinate value of the lower right corner of the detection frame, respectively.

Correspondingly, the coordinates of the upper left corner ($x_{bL}$, $y_{bL}$) and the coordinates of the lower right corner ($x_{bR}$, $y_{bR}$) of the detection frame after vertical merging are respectively:

$$x_{bL}=\min(\text{rectangles}[j+1][x_L], \text{rectangles}[j][x_L]),$$

$$y_{bL}=\min(\text{rectangles}[j+1][y_L], \text{rectangles}[j][y_L]),$$

$$x_{bR}=\max(\text{rectangles}[j+1][x_R], \text{rectangles}[j][x_R]),$$

$$y_{bR}=\max(\text{rectangles}[j+1][y_R], \text{rectangles}[j][y_R]).$$

It should be noted that, for each pre-output image, it is necessary to sequentially determine whether the markers in two adjacent detection frames are the same marker in the horizontal direction and the vertical direction respectively. The sequence of horizontal merging and vertical merging is not limited. It may be horizontal merging first and then vertical merging, or vertical merging first and then horizontal merging. The sequence of horizontal merging and vertical merging may not affect the final output result. In addition, in the above examples, the feature values are described as the coordinate value of the upper left corner and the coordinate value of the lower right corner of each detection frame. In practical application, the feature value may be selected as the same coordinate value having the same position on each detection frame. For example, the feature values are the coordinate value of the lower left corner and the coordinate value of the upper right corner, and the transformation of the feature values can not affect the final output result. The methods of selecting the feature values at different positions in the detection frame are all included in the protection scope of the application, and are not further described herein.

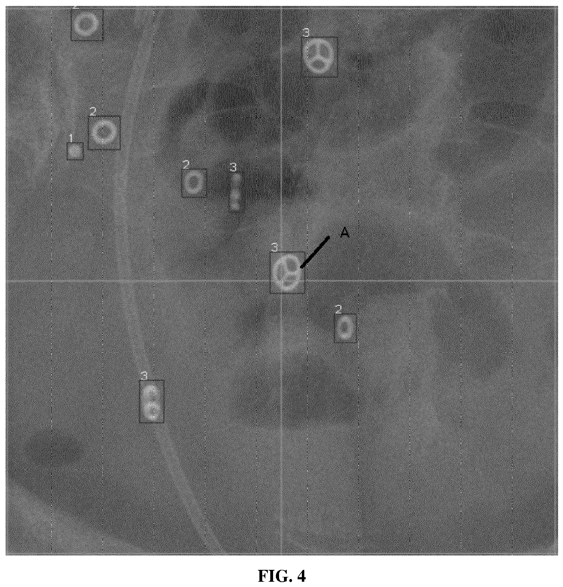

Referring to FIG. 4, after the merging, the tri-chamber marker A at an intersection position of the four unit images presents a display state in which the three detection frames in FIG. 3 are merged into one detection frame for output in the final output image.

Further, after the detection frames are recognized and merged, an image is output, and the output image has a unique detection frame corresponding to each marker. In this case, the type and position of the marker can be determined by the label and position of the detection frame in the image, and the locations of different types of markers in the gastrointestinal tract can be determined, so that the gastrointestinal motility of the subject can be determined.

Further, the present invention provides an electronic device. In an embodiment, the electronic device comprises a memory and a processor, wherein the memory stores a computer program that can run on the processor, and the processor executes the computer program to implement the steps of the image recognition method as described above.

Further, the present invention provides a computer-readable storage medium. In an embodiment, the computer-readable storage medium stores a computer program and the computer program is executed by the processor to implement the steps of the image recognition method as described above.

To sum up, with the image recognition method, the electronic device and the computer-readable storage medium of the present invention, the original image is automatically processed by a neural network model to add detection frames, and further, the detection frames labeled repeatedly are merged to improve the accuracy of image marking, so that the types and positions of markers in the image are effectively recognized, the distribution of the markers in the gastrointestinal tract can be confirmed, and the gastrointestinal motility of the subject is accurately determined.

It should be understood that, although the description is described in terms of embodiments, not every embodiment merely comprises an independent technical solution. The description is presented in this way only for the sake of clarity, those skilled in the art should have the description as a whole, and the technical solutions in each embodiment may also be combined as appropriate to form other embodiments that can be understood by those skilled in the art.

The series of detailed descriptions set forth above are only specific descriptions of feasible embodiments of the present invention and are not intended to limit the scope of protection of the present invention. Equivalent embodiments or modifications made within the spirit of the present invention should be included within the protection scope of the present invention.

## Claims

1. An image recognition method, comprising:

   segmenting an original image into a plurality of unit images having the same predetermined size, wherein a plurality of markers are distributed in the original image;
   inputting the unit images into a pre-built neural network model to carry out processing, so as to correspondingly add a detection frame to a marker in each unit image to form a pre-detection unit image, wherein the detection frame is a minimum rectangular frame enclosing the marker;
   stitching a plurality of pre-detection unit images into a pre-output image according to segmentation positions of each unit image in the original image;
   determining whether the markers selected in two adjacent detection frames in the pre-output image are the same marker;
   merging the two detection frames when the markers selected in two adjacent detection frames are the same marker; and
   reserving different detection frames corresponding to different markers when the markers selected in two adjacent detection frames are not the same marker; and
   outputting the image with the detection frames until all the detection frames confirmed to have the same markers are all merged;
   wherein determining whether the markers selected in two adjacent detection frames in the pre-output image are the same marker comprises: determining a type of the marker in each detection frame according to the probability of the type of the marker, and determining whether the markers in the frames are the same marker according to coordinate values of the two adjacent detection frames when the markers in two adjacent detection frames are of the same type.

2. The image recognition method of claim 1, wherein segmenting the original image into the plurality of unit images having the same predetermined size, the method further comprises:

if a size of any unit image is less than the predetermined size in the segmentation process, complementing edge pixel values to the original image before the unit images are formed, or complementing edge pixel values to the unit images with a size less than the predetermined size after the unit images are formed.

3. The image recognition method of claim 1, wherein the method for building the neural network model comprises:

extracting at least one feature layer by using convolutional neural networks corresponding to each unit image; wherein in the process of extracting the feature layer, p convolution kernels of m*m are configured to convolution predictors of anchor frames to process the unit images, $p=(c_1+c_2)*k$, wherein the anchor frames are preset rectangular frames with different aspect ratios, m is an odd positive integer, $c_1$ represents the number of types of markers, k represents the number of anchor frames, and $c_2$ represents the number of offset parameters for adjusting the anchor frames; wherein the detection frame is obtained by changing the size of the anchor frame.

4. The image recognition method of claim 3, the method further comprises:

performing pooling layer processing on the unit images for a plurality of times according to the types and size of the markers to obtain the corresponding feature layers.

5. The image recognition method of claim 4, wherein performing pooling layer processing on the unit images for the plurality of times according to the types and size of the markers to obtain the corresponding feature layers, the method comprises:

before performing pooling layer processing on a unit image each time, performing convolution layer processing on the unit image at least once, and sizes of the convolution kernels are the same.

6. The image recognition method of claim 3, wherein the method further comprises: setting $c_2=4$, and the offset parameters for adjusting the anchor frames comprise width offset values and height offset values of an upper left corner, a width scaling factor and a height scaling factor.

7. The image recognition method of claim 1, wherein determining whether the markers in the frames are the same marker according to the coordinate values of the two adjacent detection frames comprises:

establishing a rectangular coordinate system by taking an upper left corner of the original image as a coordinate origin, and comparing whether the difference between feature values of two horizontally adjacent detection frames is within a threshold range, and determining that the markers selected in the two detection frames used in current calculation are the same marker when the difference is within the threshold range, wherein the feature values are coordinate values of the upper left corner and coordinate values of a lower right corner of each detection frame.

8. The image recognition method of claim 1, wherein determining whether the markers in the frames are the same marker according to the coordinate values of the two adjacent detection frames comprises:

establishing a rectangular coordinate system by taking an upper left corner of the original image as a coordinate origin, and comparing whether the difference between feature values of two vertically adjacent detection frames is within a threshold range, and determining that the markers selected in the two detection frames used in current calculation are the same marker when the difference is within the threshold range, wherein the feature values are coordinate values of the upper left corner and coordinate values of a lower right corner of each detection frame.

9. The image recognition method of claim 7, wherein merging the two detection frames comprises:

comparing the coordinate values of the upper left corners of the two detection frames currently used for calculation, and respectively taking the minimum values of the horizontal coordinate and the vertical coordinate as the coordinate values of the upper left corner of the merged detection frame;
comparing the coordinate values of the lower right corners of the two detection frames, and respectively taking the maximum values of the horizontal coordinate and the vertical coordinate as the coordinate values of the lower right corner of the merged detection frame.

10. The image recognition method of claim 8, wherein merging the two detection frames comprises:

comparing the coordinate values of the upper left corners of the two detection frames currently used for calculation, and respectively taking the minimum values of the horizontal coordinate and the vertical coordinate as the coordinate values of the upper left corner of the merged detection frame;
comparing the coordinate values of the lower right corners of the two detection frames, and respectively taking the maximum values of the horizontal coordinate and the vertical coordinate as the coordinate values of the lower right corner of the merged detection frame.

11. An electronic device, comprising a memory and a processor, wherein the memory stores a computer program that runs on the processor, and the processor executes the computer program to implement the steps of an image recognition method, wherein the image recognition method comprises:

segmenting an original image into a plurality of unit images having the same predetermined size, wherein a plurality of markers are distributed in the original image;
inputting the unit images into a pre-built neural network model to carry out processing, so as to correspondingly add a detection frame to a marker in each unit image to form a pre-detection unit image, wherein the detection frame is a minimum rectangular frame enclosing the marker;
stitching a plurality of pre-detection unit images into a pre-output image according to segmentation positions of each unit image in the original image;
determining whether the markers selected in two adjacent detection frames in the pre-output image are the same marker;
merging the two detection frames when the markers selected in two adjacent detection frames are the same marker; and
reserving different detection frames corresponding to different markers when the markers selected in two adjacent detection frames are not the same marker; and
outputting the image with the detection frames until all the detection frames confirmed to have the same markers are all merged;
wherein determining whether the markers selected in two adjacent detection frames in the pre-output image are the same marker comprises: determining a type of the marker in each detection frame according to the probability of the type of the marker, and determining whether the markers in the frames are the same marker according to coordinate values of the two adjacent detection frames when the markers in two adjacent detection frames are of the same type.

12. A computer-readable storage medium having stored thereon a computer program that, when executed by a processor, implements the steps in an image recognition method, wherein the image recognition method comprises:

segmenting an original image into a plurality of unit images having the same predetermined size, wherein a plurality of markers are distributed in the original image;
inputting the unit images into a pre-built neural network model to carry out processing, so as to correspondingly add a detection frame to a marker in each unit image to form a pre-detection unit image, wherein the detection frame is a minimum rectangular frame enclosing the marker;
stitching a plurality of pre-detection unit images into a pre-output image according to segmentation positions of each unit image in the original image;
determining whether the markers selected in two adjacent detection frames in the pre-output image are the same marker;
merging the two detection frames when the markers selected in two adjacent detection frames are the same marker; and
reserving different detection frames corresponding to different markers when the markers selected in two adjacent detection frames are not the same marker; and
outputting the image with the detection frames until all the detection frames confirmed to have the same markers are all merged;
wherein determining whether the markers selected in two adjacent detection frames in the pre-output image are the same marker comprises: determining a type of the marker in each detection frame according to the probability of the type of the marker, and determining whether the markers in the frames are the same marker according to coordinate values of the two adjacent detection frames when the markers in two adjacent detection frames are of the same type.

S1

Segment an original image into a plurality of unit images having the same predetermined size, where a plurality of markers are distributed in the original image

S2

Input the unit images into a pre-built neural network model to carry out processing, so as to correspondingly add a detection frame to a marker in each unit image to form a pre-detection unit image, where the detection frame is a minimum rectangular frame enclosing the marker

S3

Stitch a plurality of pre-detection unit images into a pre-output image according to segmentation positions of each unit image in the original image

S4

Determine whether the markers selected in two adjacent detection frames in the pre-output image are the same marker

N

Y          S5

Merge the two detection frames

S6

Reserve different detection frames corresponding to different markers

S7

Output the image with the detection frames until all the detection frames confirmed to have the same markers are all merged

**FIG. 1**

| Input a 320*320 unit image | | Convolution layer 3*3 64 |
| --- | --- | --- |
| | | Convolution layer 3*3 64 |
| | | Pooling layer |
| Feature size 160*160 | | Convolution layer 3*3 128 |
| | | Convolution layer 3*3 128 |
| | | Pooling layer |
| Feature size 80*80 | | Convolution layer 3*3 256 |
| | | Convolution layer 3*3 256 |
| | | Convolution layer 3*3 256 |
| | | Pooling layer |
| | | Convolution layer 3*3 512 |
| | | Convolution layer 3*3 512 |
| Feature size 40*40 | | Convolution layer 3*3 512 → Feature layer 1 |
| | | Pooling layer |
| | | Convolution layer 3*3 512 |
| | | Convolution layer 3*3 512 |
| Feature size 20*20 | | Convolution layer 3*3 512 → Feature layer 2 |
| | | Pooling layer |
| | | Convolution layer 3*3 512 |
| | | Convolution layer 3*3 512 |
| Feature size 10*10 | | Convolution layer 3*3 512 → Feature layer 3 |

**FIG. 2**

FIG. 3

**FIG. 4**

**INTERNATIONAL SEARCH REPORT**

| International application No. |
| --- |
| **PCT/CN2021/112777** |

**A.  CLASSIFICATION OF SUBJECT MATTER**

G06T 7/00(2017.01)i

According to International Patent Classification (IPC) or to both national classification and IPC

**B.  FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 图像, 追踪, 框, 同一标记, image, trace, frame, same marker

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 111739024 A (ANKON TECHNOLOGIES CO., LTD.) 02 October 2020 (2020-10-02) claims 1-11, description paragraphs 6-16 | 1-12 |
| A | CN 102542289 A (CHONGQING UNIVERSITY OF POSTS AND TELECOMMUNICATIONS) 04 July 2012 (2012-07-04) description paragraphs 10-78 | 1-12 |
| A | CN 102999918 A (ZHEJIANG UNIVERSITY OF TECHNOLOGY) 27 March 2013 (2013-03-27) description paragraphs 10-78 | 1-12 |
| A | CN 106408594 A (JIANGNAN UNIVERSITY) 15 February 2017 (2017-02-15) entire document | 1-12 |
| A | CN 110443142 A (CHANG'AN UNIVERSITY) 12 November 2019 (2019-11-12) entire document | 1-12 |
| A | CN 110427800 A (PING AN TECHNOLOGY (SHENZHEN) CO., LTD.) 08 November 2019 (2019-11-08) entire document | 1-12 |

☑ Further documents are listed in the continuation of Box C.       ☑ See patent family annex.

| | |
| --- | --- |
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **13 October 2021** | **10 November 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/112777**

### C.    DOCUMENTS CONSIDERED TO BE RELEVANT

| Category* | Citation of document, with indication, where appropriate, of the relevant passages | Relevant to claim No. |
|---|---|---|
| A | CN 110276305 A (GUANGZHOU ZHONGJU INTELLIGENT TECHNOLOGY CO., LTD.) 24 September 2019 (2019-09-24)<br>    entire document | 1-12 |
| A | CN 111275082 A (CHINA UNIVERSITY OF GEOSCIENCES, WUHAN) 12 June 2020 (2020-06-12)<br>    entire document | 1-12 |
| A | US 2018374233 A1 (QUALCOMM INC.) 27 December 2018 (2018-12-27)<br>    entire document | 1-12 |

Form PCT/ISA/210 (second sheet) (January 2015)

## INTERNATIONAL SEARCH REPORT
### Information on patent family members

International application No.

**PCT/CN2021/112777**

| Patent document cited in search report | | | Publication date (day/month/year) | Patent family member(s) | | | Publication date (day/month/year) |
|---|---|---|---|---|---|---|---|
| CN | 111739024 | A | 02 October 2020 | CN | 111739024 | B | 24 November 2020 |
| CN | 102542289 | A | 04 July 2012 | CN | 102542289 | B | 04 June 2014 |
| CN | 102999918 | A | 27 March 2013 | CN | 102999918 | B | 22 April 2015 |
| CN | 106408594 | A | 15 February 2017 | CN | 106408594 | B | 02 October 2018 |
| CN | 110443142 | A | 12 November 2019 | None | | | |
| CN | 110427800 | A | 08 November 2019 | WO | 2020253499 | A1 | 24 December 2020 |
| | | | | US | 2021182567 | A1 | 17 June 2021 |
| | | | | SG | 11202100930 | A1 | 25 February 2021 |
| CN | 110276305 | A | 24 September 2019 | CN | 110276305 | B | 15 June 2021 |
| CN | 111275082 | A | 12 June 2020 | None | | | |
| US | 2018374233 | A1 | 27 December 2018 | US | 10395385 | B2 | 27 August 2019 |
| | | | | WO | 2019005291 | A1 | 03 January 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010881849X